# FASCICULE DE BREVET EUROPEEN

(11) **EP 3 981 649 B1**
(45) Date de publication et mention de la délivrance du brevet: **03.12.2025**
(21) Numéro de dépôt: 21201125.8
(22) Date de dépôt: 06.10.2021
(51) Int. Cl.: B60R 5/00, B61D 37/00, B64D 11/00

(54) **PORTE-BAGAGE RÉGLABLE ET VÉHICULE ASSOCIÉ**
VERSTELLBARER GEPÄCKHALTER UND ENTSPRECHENDES FAHRZEUG
ADJUSTABLE LUGGAGE RACK AND ASSOCIATED VEHICLE

(30) Priorité: 06.10.2020 FR 2010202
(43) Date de publication de la demande: 13.04.2022
(73) Titulaire: SpeedInnov, 75008 Paris (FR)
(72) Inventeur: YAKUBOVICH-HUGON, Tatiana, 17000 LA ROCHELLE (FR); COMBEAU, Eric, 17600 CORME ROYAL (FR)
(74) Mandataire: Plasseraud IP

(56) Documents cités:
- WO-A1-2015/112579
- ES-A2- 2 433 114
- US-A1- 2013 307 285

## Description

La présente invention concerne un porte-bagage pour véhicule, notamment pour véhicule ferroviaire.

L'invention concerne également un véhicule, notamment un véhicule ferroviaire, comprenant un tel porte-bagage.

Il est commun d'équiper les véhicules de transport de passagers de porte-bagages, destinés à accueillir les bagages trop volumineux pour être stockés sous les sièges.

Ces porte-bagages sont généralement situés dans les cabines pour voyageurs, par exemple au voisinage des portes d'accès. Ils comprennent par exemple plusieurs éléments de support superposés, dimensionnés pour recevoir un ou plusieurs bagages standards, par exemple du type désigné sous l'appellation de clayette.

Cependant, ces porte-bagages peuvent encore être améliorés. En effet, il est parfois impossible d'y installer des bagages de dimensions hors-normes, notamment très longs ou très hauts, comme par exemple des skis ou des objets de décoration d'intérieur.

Un porte-bagage pour véhicule est par exemple connu du document ES 2 433 114 A2. Une étagère pour véhicule est par exemple connue du document US 2013/307285.

Le document WO 2015/112579 A1 divulgue un porte-bagage selon le préambule de la revendication 1.

Un but de l'invention est donc de fournir un porte-bagage permettant de ranger des bagages présentant des dimensions inhabituelles, tout en maintenant les standards d'ergonomie et de sécurité habituels du transport de passagers.

A cet effet, l'invention a pour objet un porte-bagage pour véhicule selon la revendication 1.

Un tel porte-bagage permet d'adapter les hauteurs des éléments de support aux bagages de dimensions inhabituels, sans encombrer outre mesure l'espace lorsque cela n'est pas nécessaire.

Selon des modes de réalisation particuliers, le porte-bagage selon l'invention présente l'une ou plusieurs des caractéristiques des revendications 2 à 7.

L'invention a également pour objet un véhicule, notamment véhicule ferroviaire, selon la revendication 8.

L'invention sera mieux comprise à la lecture de la description qui suit, donnée uniquement à titre d'exemple non limitatif et faite en référence aux dessins annexés, parmi lesquels :
- [Fig 1] la figure 1 est une vue schématique de côté d'un porte-bagage selon l'invention ; et

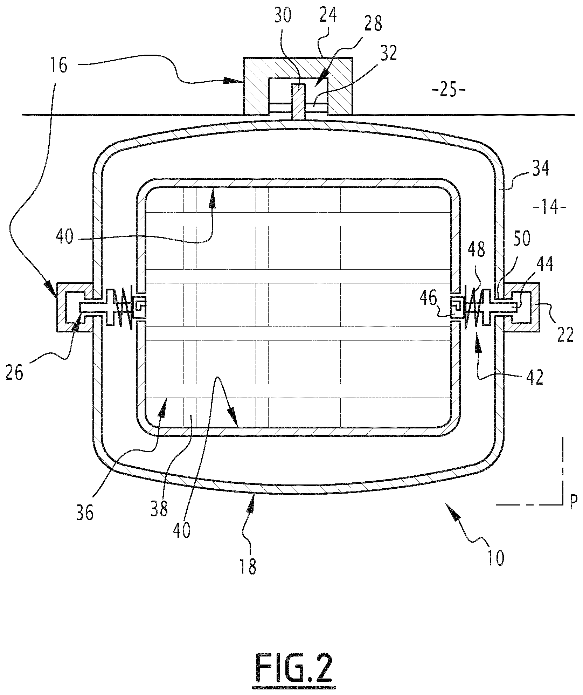

- [Fig 2] la figure 2 est une vue schématique en coupe horizontale du porte-bagage de la figure 1.

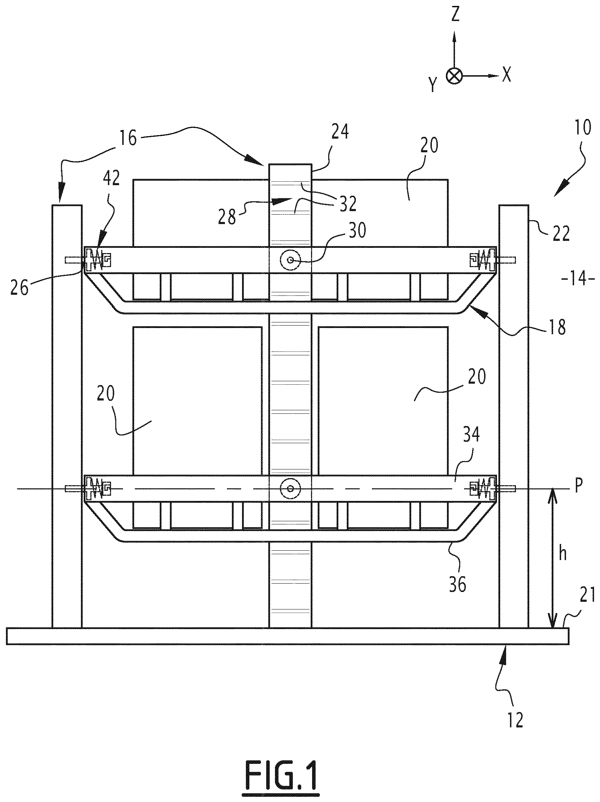

Un porte-bagage 10 selon un exemple de mode de réalisation de l'invention est représenté sur la figure 1.

Le porte-bagage 10 équipe un véhicule 12 partiellement visible sur la figure 1.

La description qui suit est faite en référence à une direction longitudinale X, une direction transversale Y et une direction d'élévation Z, représentées sur les figures. La direction longitudinale X s'étend selon la direction d'avancée du véhicule 12 en fonctionnement normal. La direction d'élévation Z est orthogonale à la direction longitudinale X et s'étend selon une hauteur du véhicule 12. La direction transversale Y est orthogonale à la direction longitudinale X et à la direction d'élévation Z et s'étend selon la largeur du véhicule 12.

Par les termes « sensiblement parallèle », « sensiblement selon » et « sensiblement perpendiculaire », on entend respectivement « parallèle », « selon » et « perpendiculaire » avec une marge d'erreur angulaire inférieure ou égale à 10°, de préférence inférieure à 5°.

Par le terme « sensiblement égal », on entend « égal » avec une marge d'erreur inférieure ou égale à 10% de la valeur nominale, de préférence inférieure ou égale à 5%.

Le véhicule 12 est par exemple un véhicule ferroviaire, notamment de type train à moyenne ou grande vitesse, ou un véhicule de transport urbain ou péri-urbain tel qu'un tramway ou un métro. En variante, le véhicule 12 est un véhicule de transport routier, comme un car ou un bus, ou bien un véhicule de transport maritime.

Le véhicule 12 est destiné à transporter des voyageurs, et comprend au moins une cabine 14 pouvant accueillir les voyageurs et leurs bagages.

Le porte-bagage 10 est notamment destiné à supporter les bagages dont les dimensions ne permettent pas de les stocker sous les sièges ou dans d'éventuels porte-bagages situés au-dessus desdits sièges.

Le porte-bagage 10 comprend une structure portante 16 et au moins un élément de support 18, par exemple deux éléments de support 18, destinés à supporter chacun au moins un bagage 20.

La structure portante 16 comprend une pluralité de zones de réception, pour recevoir chaque élément de support 18 dans une pluralité de positions possibles, l'élément de support 18 étant agencé, dans chacune des positions, à hauteur h différente respective, mesurée selon une direction d'élévation Z depuis un plancher 21 du véhicule 12.

La structure portante 16 comprend par exemple au moins un montant 22 s'étendant sensiblement selon la direction d'élévation Z ainsi qu'au moins une crémaillère 24, fixée de préférence à demeure sur une paroi 25 du véhicule 12.

Par exemple, la structure portante 16 comprend deux montants 22 et une crémaillère 24.

En variante, la structure portante 16 comprend deux crémaillères 24 ou plus s'étendant parallèlement les unes aux autres le long de la paroi 25, par exemple trois crémaillères 24.

Chaque montant 22 s'étend par exemple à l'écart de la paroi 25, et comporte une pluralité d'orifices de blocage 26 respectivement espacés selon la direction d'élévation Z, correspondant aux positions de réception de la ou chaque élément de support 18.

Chaque crémaillère 24 définit une pluralité de logements 28 respectivement espacés selon la direction d'élévation Z, correspondant aux positions de réception de chaque élément de support 18.

Par exemple, la crémaillère 24 comprend une pluralité de barreaux 32 s'étendant sensiblement selon la direction longitudinale X, régulièrement espacés selon la direction d'élévation Z, définissant entre eux les logements 28.

Ainsi, les logements 28 et les orifices de blocage 26 définissent les positions de réception des éléments de support 18 par la structure portante 16, qui sont par exemple régulièrement espacées selon la direction d'élévation Z.

Chaque élément de support 18 comprend un cadre 34 qui définit un plan d'étendue P respectif de l'élément de support 18, ainsi qu'un membre de portage 36 fixé au cadre 34 et supportant le ou les bagages 20. Le plan d'étendue P est sensiblement orthogonal à la direction d'élévation Z.

Chaque élément de support 18 comprend également au moins un organe de fixation 30 de l'élément de support 18 à la structure portante 16, notamment propre à fixer l'élément de support 18 à la crémaillère 24 dans une des positions.

Le cadre 34 est propre à permettre la manipulation de l'élément de support 18 et sa fixation à la structure portante 16.

Le cadre 34 est par exemple formé par un tube métallique cintré pour présenter une forme sensiblement rectangulaire.

Le membre de portage 36 est agencé pour supporter les bagages 20 posés sur l'élément de support 18.

Le membre de portage 36 comprend par exemple une pluralité de traverses 38 métalliques s'étendant entre des bords 40 opposés du cadre, selon deux directions orthogonales l'une à l'autre.

Le membre de portage 36 s'étend par exemple en dessous du plan d'étendue P du cadre, relativement à la direction d'élévation Z, de façon à former un réceptacle pour les bagages 20.

Selon une variante non représentée, le membre de portage 36 s'étend dans le plan d'étendue P.

Selon une autre variante, les traverses 38 du membre de portage 36 s'étendent parallèles les unes aux autres entre les bords 40 du cadre 34, selon une unique direction.

Selon une autre variante, le membre de portage 36 ne comprend pas de traverses 38 mais au moins une bande de support tendue entre deux bords 40 opposés du cadre 34, dans le plan d'étendue P.

Chaque organe de fixation 30 est propre à fixer l'élément de support 18 à la crémaillère dans une position choisie parmi la pluralité de positions de l'élément de support 18.

Chaque organe de fixation 30 est une tige s'étendant depuis le cadre 34 parallèlement au plan d'étendue P. La tige est adaptée pour être disposée dans un des logements 28 de la crémaillère 24 de façon à fixer l'élément de support 18 dans une des positions.

Selon un mode de réalisation, une extrémité distale de la tige présente un crochet recourbé vers le bas selon la direction d'élévation Z, agencé pour empêcher la tige de sortir du logement 28 de manière involontaire.

Avantageusement, l'élément de support 18 comprend, en plus du ou des organes de fixation 30, au moins un organe de blocage 42, notamment un organe de blocage 42 pour chaque montant 22 de la structure portante 16.

Chaque organe de blocage 42 est propre à fixer l'élément de support 18 à l'un des montants 22 dans une des positions et à bloquer l'élément de support 18 dans cette position.

Avantageusement, chaque élément de support 18 comprend un nombre pair d'organes de blocage 42 disposés de manière coaxiale deux à deux, de part et d'autre du cadre 34 et orientés opposés l'un à l'autre. Cela améliore la fixation des éléments de support 18 à la structure portante 16.

Chaque organe de blocage 42 comprend par exemple un verrou à ressort, comprenant une tige 44 munie d'une partie d'actionnement 46 ainsi qu'un ressort 48.

La tige 44 est mobile en translation dans un orifice 50 à travers le cadre 34 et les orifices de blocage 26 du montant 22 en regard de l'orifice 50, entre une position de blocage et une position de déblocage.

Dans la position de blocage, la tige 44 est engagée à travers le cadre 34 et le montant 22, de façon à bloquer l'élément de support 18 dans sa position.

Dans la position de déblocage, la tige 44 est désengagée d'au moins l'un parmi le cadre 34 et le montant 22, de façon à laisser libre l'élément de support 18.

Le ressort 48 est agencé de manière à solliciter la tige 44 vers sa position de blocage en l'absence d'actionnement extérieur, par exemple agencé comprimé entre la paroi interne du cadre 34 au voisinage de l'orifice 50 et un épaulement de la tige 44.

Avantageusement, la partie d'actionnement 46 de l'organe de blocage 42 est manipulable avec une clé à baïonnette. La clé à baïonnette est alors nécessaire pour déverrouiller l'organe de blocage 42, c'est-à-dire pour solliciter l'organe de blocage 42 vers une position dans laquelle l'organe de blocage 42 ne bloque pas le déplacement de l'élément de support 18. Cela permet de restreindre la manipulation de l'élément de support 18 aux opérateurs autorisés et munis de ladite clé à baïonnette, pour éviter des incidents.

Avantageusement, la structure portante 16 est adaptée pour recevoir un nombre variable d'éléments de support 18, le nombre d'éléments de support étant ajusté en fonction de la hauteur des bagages 20 reçus sur le porte-bagage 10. Cela permet de réduire l'encombrement du porte-bagage 10 et d'améliorer sa modularité.

Le porte-bagage 10 selon l'invention permet donc de stocker des bagages présentant des dimensions non standard, notamment des longueurs importantes, grâce à la possibilité d'ajuster les hauteurs h des éléments de support 18. La possibilité de démonter complètement des éléments de support 18 permet également de restreindre l'encombrement du porte-bagage 10 et améliore encore sa modularité. Enfin, le porte-bagage 10 est simple d'utilisation et robuste, et son utilisation peut être sécurisée notamment grâce à l'organe de blocage 42.

## Revendications

1. Porte-bagage (10) pour véhicule (12), notamment pour véhicule ferroviaire, comprenant :
- une structure portante (16),
- au moins un élément de support (18) propre à supporter au moins un bagage (20), l'élément de support (18) comprenant au moins un organe de fixation (30) à la structure portante (16),
la structure portante (16) comprenant une pluralité de zones de réception, pour recevoir l'au moins un élément de support (18) dans une pluralité de positions possibles, l'élément de support (18) étant agencé, dans chacune des positions, à une hauteur (h) différente respective, mesurée selon une direction d'élévation (Z) sensiblement orthogonale à un plan d'étendue (P) de l'élément de support (18),
la structure portante (16) comprenant au moins une crémaillère (24) destinée à être disposée le long d'une paroi (25) du véhicule (12), la crémaillère (24) étant propre à recevoir le ou chaque organe de fixation (30) de chaque élément de support (18),
**caractérisé en ce que**, chaque organe de fixation (30) étant une tige et portant optionnellement un crochet.

2. Porte-bagage (10) selon la revendication 1, dans lequel chaque zone de réception comprend au moins un logement (28) de réception d'un des organes de fixation (30) de chaque élément de support (18) dans l'une des positions.

3. Porte-bagage (10) selon la revendication 1 ou 2, dans lequel les positions sont espacées sensiblement régulièrement selon la direction d'élévation (Z).

4. Porte-bagage (10) selon l'une quelconque des revendications 1 à 3, dans lequel chaque élément de support (18) comprend au moins un organe de blocage (42) de l'élément de support (18) dans une position choisie parmi la pluralité de positions.

5. Porte-bagage (10) selon la revendication 4, dans lequel le ou chaque organe de blocage (42) comporte un verrou à ressort.

6. Porte-bagage (10) selon la revendication 4 ou 5, dans lequel le ou chaque organe de blocage (42) comprend une partie d'actionnement (46) manipulable avec une clé à baïonnette pour déverrouiller l'organe de blocage (42).

7. Porte-bagage (10) selon l'une quelconque des revendications 4 à 6, dans lequel la structure portante (16) comprend au moins un montant (22) comprenant une pluralité d'orifices de blocage (26), agencés pour recevoir le ou un des organes de blocage (42) de chaque élément de support (18).

8. Véhicule (12), notamment véhicule ferroviaire, comprenant au moins une voiture comprenant un compartiment (14) destiné à accueillir des passagers, le véhicule (12) comprenant au moins un porte-bagage (10) selon l'une quelconque des revendications 1 à 7, disposé dans le compartiment (14).

## Patentansprüche

1. Gepäckträger (10) für ein Fahrzeug (12), insbesondere für ein Schienenfahrzeug, umfassend:
- eine Tragestruktur (16),
- wenigstens ein Halterungselement (18), welches dazu geeignet ist, wenigstens ein Gepäckstück (20) zu halten, wobei das Halterungselement (18) wenigstens ein Befestigungselement (30) an die Tragestruktur (16) umfasst,
wobei die Tragestruktur (16) eine Mehrzahl von Aufnahmezonen zum Aufnehmen des wenigstens einen Halterungselements (18) in einer Mehrzahl von möglichen Positionen umfasst, wobei das Halterungselement (18) in jeder der Positionen in einer jeweiligen verschiedenen Höhe (h) angebracht ist, gemessen entlang einer Höhenrichtung (Z), welche im Wesentlichen orthogonal zu einer Erstreckungsebene (P) des Halterungselements (18) ist,
wobei die Tragestruktur (16) wenigstens eine Zahnstange (24) umfasst, welche dazu vorgesehen ist, entlang einer Wand (25) des Fahrzeugs (12) angeordnet zu sein, wobei die Zahnstange (24) dazu geeignet ist, das oder jedes Befestigungselement (30) von jedem Halterungselement (18) aufzunehmen, **dadurch gekennzeichnet, dass** jedes Befestigungselement (30) eine Stange ist und optional einen Haken trägt.

2. Gepäckträger (10) nach Anspruch 1, wobei jede Aufnahmezone wenigstens ein Aufnahmefach (28) für eines der Befestigungselemente (30) von jedem Halterungselement (18) in einer der Positionen umfasst.

3. Gepäckträger (10) nach Anspruch 1 oder 2, wobei die Positionen im Wesentlichen regelmäßig entlang der Höhenrichtung (Z) beabstandet sind.

4. Gepäckträger (10) nach einem der Ansprüche 1 bis 3, wobei jedes Halterungselement (18) wenigstens ein Blockierungselement (42) für das Halterungselement (18) in einer Position umfasst, welche unter der Mehrzahl von Positionen ausgewählt wird.

5. Gepäckträger (10) nach Anspruch 4, wobei das oder jedes Blockierungselement (42) eine Federverriegelung umfasst.

6. Gepäckträger (10) nach Anspruch 4 oder 5, wobei das oder jedes Blockierungselement (42) einen Betätigungsteil (46) umfasst, welcher mit einem Bajonettschlüssel betätigbar ist, um das Verriegelungselement (42) zu entriegeln.

7. Gepäckträger (10) nach einem der Ansprüche 4 bis 6, wobei die Tragestruktur (16) wenigstens einen Pfosten (22) umfasst, welcher eine Mehrzahl von Blockierungsöffnungen (26) umfasst, welche dazu angeordnet sind, das oder eines der Blockierungselemente (42) von jedem Halterungselement (18) aufzunehmen.

8. Fahrzeug (12), insbesondere Schienenfahrzeug, umfassend wenigstens einen Wagen, welcher eine Kabine (14) umfasst, welche dazu vorgesehen ist, Passagiere unterzubringen, wobei das Fahrzeug (12) wenigstens einen Gepäckträger (10) nach einem der Ansprüche 1 bis 7 umfasst, welcher in der Kabine (14) angeordnet ist.

## Claims

1. Luggage rack (10) for a vehicle (12), notably for a rail vehicle, comprising:
- a load-bearing structure (16),
- at least one support element (18) suitable for supporting at least one piece of luggage (20), the support element (18) comprising at least one member (30) for fastening to the load-bearing structure (16),
the load-bearing structure (16) comprising a plurality of receiving zones, for receiving the at least one support element (18) in a plurality of possible positions, the support element (18) being arranged, in each of the positions, at a different respective height (h), measured according to an elevation direction (Z) substantially orthogonal to a plane (P) of extension of the support element (18),
the load-bearing structure (16) comprising at least one rack (24) intended to be disposed along a wall (25) of the vehicle (12), the rack (24) being suitable for receiving the or each fastening member (30) of each support element (18),
**characterised in that**
each fastening member (30) is a rod and optionally carries a hook.

2. Luggage rack (10) according to claim 1, wherein each receiving zone comprises at least one housing (28) for receiving one of the fastening members (30) of each support element (18) in one of the positions.

3. Luggage rack (10) according to claim 1 or 2, wherein the positions are substantially regularly spaced apart according to the elevation direction (Z).

4. Luggage rack (10) according to any one of claims 1 to 3, wherein each support element (18) comprises at least one member (42) for locking the support element (18) in a position chosen from the plurality of positions.

5. Luggage rack (10) according to claim 4, wherein the or each locking member (42) includes a spring lock.

6. Luggage rack (10) according to claim 4 or 5, wherein the or each locking member (42) comprises an actuation part (46) that can be manipulated with a bayonet key to unlock the locking member (42).

7. Luggage rack (10) according to any one of claims 4 to 6, wherein the load-bearing structure (16) comprises at least one post (22) comprising a plurality of locking holes (26), arranged to receive the or one of the locking members (42) of each support element (18).

8. Vehicle (12), notably a railway vehicle, comprising at least one car comprising a compartment (14) intended to receive passengers, the vehicle (12) comprising at least one luggage rack (10) according to any one of claims 1 to 7, disposed in the compartment (14).
